(19) Europäisches Patentamt
European Patent Office
Office européen des brevets

(11) Veröffentlichungsnummer: **0 328 774 B1**

# (12) EUROPÄISCHE PATENTSCHRIFT

(45) Veröffentlichungstag der Patentschrift: **10.11.93**

(51) Int. Cl.[5]: **C08F 297/04**, B60C 1/00

(21) Anmeldenummer: **88121267.4**

(22) Anmeldetag: **20.12.88**

(54) **ABC-Blockcopolymerisate auf Basis von Butadien, Isopren und Styrol, Verfahren zu ihrer Herstellung und ihre Verwendung.**

(30) Priorität: **13.02.88 DE 3804547**

(43) Veröffentlichungstag der Anmeldung:
**23.08.89 Patentblatt 89/34**

(45) Bekanntmachung des Hinweises auf die Patenterteilung:
**10.11.93 Patentblatt 93/45**

(84) Benannte Vertragsstaaten:
**AT BE CH DE ES FR GB IT LI LU NL SE**

(56) Entgegenhaltungen:
**EP-A- 0 173 791**
**GB-A- 2 071 117**

(73) Patentinhaber: **HÜLS AKTIENGESELLSCHAFT**

**D-45764 Marl(DE)**

(72) Erfinder: **Herrmann, Christoph, Dr.**
**Siedlungsstrasse 3**
**D-4370 Marl(DE)**
Erfinder: **Hellermann, Walter, Dr.**
**Waldstrasse 16**
**D-4270 Dorsten 21(DE)**
Erfinder: **Fuchs, Hans-Bernd, Dr.**
**Leverkusener Strasse 12**
**D-4370 Marl(DE)**
Erfinder: **Nordsiek, Karl-Heinz, Dr.**
**Neumarkstrasse 4**
**D-4370 Marl(DE)**
Erfinder: **Wolpers, Jürgen, Dr.**
**Hetfeld 15 c**
**D-4358 Haltern(DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ungesättigte elastomere ABC-Blockcopolymerisate auf Basis von Butadien, Isopren und Styrol, ihre Herstellung und ihre Verwendung zur Herstellung von Reifenlaufflächen.

Bekanntlich werden an Kautschuke, die im Reifensektor eingesetzt werden, folgende Anforderungen gestellt:

- Der kalte Fluß soll möglichst gering sein.
- Die Kautschuke sollen bei den sich anschließenden Mischprozessen gut verarbeitbar sein.
- Die Kautschuke sollen bei den Verformungsprozessen fließfähig sein.
- Die Kautschuke sollen gut vulkanisierbar sein.

Darüber hinaus sind die Forderungen zu berücksichtigen, die sich aus ihrem Einsatzgebiet im Reifensektor ergeben. Bekanntlicherweise werden an Reifenlaufflächen in jüngster Zeit erhöhte Anforderungen gestellt:

a) Sie sollen auch bei tiefen Temperaturen noch hoch elastisch sein.
b) Sie sollen eine gute Naßrutschfestigkeit aufweisen.
c) Sie sollen einen hohen Abriebwiderstand aufweisen und dementsprechend eine lange Lebensdauer haben.
d) Sie sollen bei dynamischer Beanspruchung möglichst wenig Wärme bilden. Ihr Rollwiderstand soll möglichst klein sein, damit der Treibstoffverbrauch des Fahrzeugs möglichst niedrig ist.

Es ist bekannt, daß Kautschuke bei der Prüfung im Torsionsschwingungsversuch eine Temperaturabhängigkeit des logarithmischen Dekrementes der mechanischen Dämpfung aufweisen, die in der graphischen Darstellung einem für den jeweiligen Kautschuk charakteristischen Kurvenverlauf entspricht. Die gewünschten Anforderungen an die Reifenlaufflächen stellen sich vorzugsweise dann ein, wenn die Dämpfungskurve einen möglichst breiten Schwingungsdämpfungsbereich aufweist (vgl. K. H. Nordsiek, Kautschuk und Gummi, Kunststoffe 38, 178 (1985) und 39, 599 (1986).

Es ist auch bekannt, daß die sich teilweise widersprechenden Eigenschaften der Reifenlaufflächen ganz wesentlich durch die Art und Zusammensetzung der zu diesem Zweck eingesetzten Kautschuke bestimmt werden. Homopolymere auf Basis der üblicherweise eingesetzten monomeren Rohstoffe wie Butadien, Isopren und Styrol erfüllen diese Bedingungen noch nicht befriedigend (vgl. EP-A- 0 054 204 und JP-A-82/87 406).

Verschnitte von Kautschuksorten weisen in der Praxis den Nachteil auf, daß das aufgeführte Eigenschaftsspektrum nicht erreicht und die gewünschte reifentechnische Qualität nicht zuverlässig reproduziert wird. Es besteht daher ein Bedarf an Kautschuken, die den oben genannten Eigenschaftsvorstellungen möglichst weit entgegen kommen. Dieses Ziel sollte sich grundsätzlich mit Kautschuken erreichen lassen, die aus Polymeren mit unterschiedlichen Blöcken bestehen.

Als Blöcke eines Polymeren sollen im Rahmen dieser Erfindung nicht nur die Kettensegmente angesehen werden, die aus unterschiedlichen Monomerbausteinen bestehen, sondern auch jene Segmente, die sich - bedingt durch die äußeren Verfahrensparameter - in der Art der Verknüpfung der Monomerbausteine oder in dem Anteil, in dem sie in ein Kettensegment eingebaut sind, unterscheiden.

Das Butadien-Isopren-Copolymer, das in der EP-A- 0 054 204 beschrieben wird, weist zwar in seinem Anfangs- und Endteil einen unterschiedlichen Gehalt an Isopren auf, der auf die geringere Polymerisationsneigung von Isopren im Vergleich zu Butadien zurückzuführen ist, ist aber in dem soeben erläuterten Sinne nicht als Blockcopolymer anzusprechen.

Auch wenn man während der Copolymerisation von Dienen und Styrol den Styrolanteil verändert (vgl. DE-OS 31 08 583), erhält man kein Blockcopolymer, sondern fließende Übergänge. Die gewünschte Verbesserung der reifentechnischen Eigenschaften ist auch hier noch unzureichend. Die DE-OS 31 08 583 beschreibt 1-phasige Kautschuksysteme mit einem Dämpfungsmaximum, das von einem Glasübergangspunkt in einem sehr engen Temperaturbereich verursacht wird.

Eine Verbesserung wird erst dadurch erreicht, daß man ein Copolymer aus zwei unterschiedlichen Blöcken A und B herstellt, die sich in ihrer Struktur und/oder Zusammensetzung unterscheiden.

So beschreibt z. B. die DE-OS 31 51 139 ein statistisches Styrol-Butadien-Blockcopolymer. Die Blöcke unterscheiden sich in ihrem Butadiengehalt und dem Gehalt an Vinylbindungen. Sie sind so miteinander vermischt, daß sie verträglich sind und daß anstelle von 2 getrennten lediglich eine einzige Dämpfungsspitze entsteht.

In der DE-OS 35 30 438 werden Kautschukmassen beansprucht, die mindestens 20 % eines Styrol-Butadien-Blockcopolymeren enthalten. Die Blöcke unterscheiden sich im Styrolgehalt, im Gehalt an Vinylbindungen und - daraus folgend - in der Glasübergangstemperatur. Die tan delta-Kurve weist auch in diesem Falle lediglich einen schmalen Temperaturbereich maximaler Dämpfung auf.

Die japanische Offenlegungsschrift 83/122 907 beschreibt verzweigte Kautschuke, die durch Umsetzung einer z. B. metallischen Tetrahalogenverbindung, wie $SnCl_4$, mit Blockcopolymeren, bestehend aus einem Polyisopren- und einem Polybutadienblock, erhältlich sind. Jeder der beiden Blöcke besteht also aus einem Homopolymeren. Der nach Umsetzung mit dem metallischen Kupplungsmittel erhaltene sternförmige Kautschuk bildet ein 1-phasiges Kautschuksystem mit einem Glasübergangspunkt aus.

Die GB-A- 2 090 840 beschreibt Blockcopolymere, die durch Polymerisation von Dienen bzw. Copolymerisation von Diengemischen erhalten werden und deren Blöcke sich im Gehalt an 1,2- und/oder 3,4-Struktureinheiten um 20 bis 50 Mol-% unterscheiden. Die Herstellung solcher Blockcopolymere erfolgt in Gegenwart unterschiedlicher Mengen an Cokatalysator oder bei unterschiedlichen Temperaturen.

Die EP-A- 0 173 791 beschreibt Laufstreifen, deren Kautschukkomponente zu 30 bis 100 % aus Blockcopolyerisaten auf Basis von Butadien, Isopren und gegebenenfalls Styrol und/oder Piperylen bestehen kann. Die Blockcopolymerisate werden in Gegenwart von Cokatalysatoren unter Erhöhung der Temperatur hergestellt und können beispielsweise eine ABC-Struktur aufweisen. Die Polymerisate enthalten stets einen Endblock auf Basis von Butadien, der bei steigender Temperatur hergestellt wird und infolgedessen einen vergleichsweise hohen Anteil an 1,2-Struktureinheiten und eine ungleichmäßige Verteilung der Vinylgruppen aufweist. Auch diese Blockcopolymerisate ergeben noch nicht Dämpfungs-kurven mit einem hinreichend breiten Plateau, um alle Reifeneigenschaften optimal zu erfüllen (siehe Vergleichsversuch A). Daher wird bereits in dieser Schrift vorgeschlagen, die erhaltenen Blockcopolymerisate mit anderen Kautschukkomponenten zu verschneiden (siehe Anspruch 1 und Beispiel 2).

Allen aufgeführten Blockcopolymeren haftet mindestens einer der folgenden Mängel an:

1. Die Blockcopolymeren werden den oben genannten Anforderungen im Hinblick auf ihre Verwendung als Reifenmaterial nicht befriedigend gerecht.
2. Es treten Probleme in der Verträglichkeit der beiden Blöcke auf.
3. Die Dämpfungskurve weist nur ein schmales Dämpfungsmaximum auf.
4. Es werden große Mengen des vergleichsweise teuren Isoprens benötigt.

Ziel der vorliegenden Erfindung war es, ABC-Blockcopolymerisate auf Basis von Butadien, Isopren und Styrol zu entwickeln, die eine Dämpfungskurve mit so breitem Schwingungsdämpfungsbereich aufweisen, daß eine Zumischung von weiteren Kautschukkomponenten zur Erweiterung des Schwingungsdämpfungsbereichs nicht mehr erforderlich ist. Vorzugsweise sollte dieser Schwingungsdämpfungsbereich zwischen -90 °C und + 30 °C liegen. 5

Es wurden jetzt überraschend ABC-Blockcopolymerisate auf Basis von 40 bis 80 % Butadien, 5 bis 40 % Isopren und 2 bis 30 % Styrol gefunden. Diese bestehen aus

40 bis 75 % eines Blockes A, der Styrol- und Butadieneinheiten oder Isopren- und Butadieneinheiten mit einem Gehalt an Vinyl-bzw. Isopropenylgruppen von weniger als 15 % enthält,

bis 25 % eines Blockes B, der Styrol- und Butadieneinheiten oder Isopren- und Butadieneinheiten mit einem Vinyl- bzw. Isopropenylgehalt von mehr als 70 % enthält, oder

bis 25 % eines Blockes B', der Styrol-, Isopren- und gegebenenfalls Butadieneinheiten mit einem Gehalt an gleichmäßig verteilten Isopropenyl- bzw. Vinylgruppen von weniger als 15 % enthält, und

20 bis 55 % eines Blockes C, der Styrol- und Isopreneinheiten sowie gegebenenfalls Butadieneinheiten mit einem Isopropenyl-bzw. Vinylgehalt von mehr als 70 % enthält.

Vorzugsweise beträgt der Anteil der Butadieneinheiten im Block A 70 bis 95 %. Vorzugsweise beträgt der Anteil der Butadieneinheiten im Block B 50 bis 90 %.

Die ABC-Blockcopolymerisate können sowohl linear als auch verzweigt sein. Die Verzweigung kann mit Hilfe eines Verzweigungsmittels während der Polymerisation oder mit Hilfe eines Kupplungsmittels zu Ende der Polymerisation erreicht werden.

Das Verfahren zur Herstellung der Blockcopolymerisate durch anionische Polymerisation der Monomeren in einem inerten organischen Lösemittel in Gegenwart einer Li-organischen Verbindung und eines Cokatalysators ist dadurch gekennzeichnet, daß man zunächst einen Block A durch Polymerisation von Butadien und Styrol oder Butadien und Isopren in Abwesenheit eines Cokatalysators herstellt. Danach stellt man einen Block B her, indem man einen Cokatylsator zusetzt und die Polymerisation fortsetzt. Anschließend setzt man das noch fehlende dritte Monomer aus der Gruppe Butadien, Isopren und Styrol zu und führt die Polymerisation zu Ende. Man kann auch die Polymerisation des Blockes C mit einem frisch angesetzten Monomergemisch, das Isopren und Styrol enthalten muß und zusätzlich Butadien enthalten kann, durchführen.

Alternativ besteht die Möglichkeit, Block B' herzustellen, indem man das noch fehlende dritte Monomere aus der Gruppe Butadien, Isopren und Styrol zusetzt und die Polymerisation fortsetzt. Der Block C wird dann mit der Zugabe eines Cokatalysators eingeleitet. Es besteht die Möglichkeit, gleichzeitig ein weiteres Monomeres aus der Gruppe Butadien, Isopren und Styrol zuzusetzen.

Für das vorliegende Verfahren bzw. die daraus erhältlichen Polymerisate sind also folgende Kriterien wesentlich:

I. Der Block A enthält stets 2 Monomere, nämlich Butadien und Isopren oder Butadien und Styrol. In diesem Kriterium unterscheiden sich die ABC-Blockcopolymerisate eindeutig von ähnlichen Polymerisaten, die in der nicht vorveröffentlichten, deutschen Patentanmeldung P 37 10 002 (ABC-Blockcopolymerisate auf Basis von Butadien und Isopren, Verfahren zu ihrer Herstellung und ihre Verwendung) beschrieben sind.

II. Der Block A enthält einen geringen Anteil von Alkenylseitengruppen. Für den Fall, daß der Block A durch Polymerisation von Butadien und Styrol erhalten wird, beträgt der Vinylanteil weniger als 15 Gewichtsprozent. Für den Fall, daß der Block A durch Polymerisation von Butadien und Isopren erhalten wird, liegt der Vinyl- und Isopropenylanteil insgesamt unter 15 Gewichtsprozent.

III. Es ist bekannt, daß die drei Monomeren Butadien, Isopren und Styrol eine unterschiedliche Reaktivität aufweisen und infolgedessen - selbst bei gleichmolaren Ausgangsmengen - in dem meisten Fällen zu unterschiedlichen Anteilen zu Beginn der Polymerisation in das Polymere eingebaut werden. Unabhängig hiervon sind die Vinyl-bzw. Isopropenylgruppen vorzugsweise gleichmäßig auf die vorhandenen Butadien- bzw. Isopreneinheiten verteilt. Dies gilt für alle drei Blöcke.

IV. Wesentlich ist, daß der mittlere Block durch Zugabe eines Cokatalysators oder durch Zugabe des dritten Monomeren eingeleitet wird. Dies bedeutet also beispielsweise, daß nach Polymerisation eines Gemisches aus Butadien und Isopren nunmehr Styrol zugesetzt wird. Es kann sich auch der Anteil von Butadien oder Isopren verändern. Praktisch geht man üblicherweise so vor, daß man von vorn herein die Polymerisation des Blockes A mit einer größeren Menge an Monomeren beginnt und zu Beginn der Polymerisation des Blockes B′ lediglich das dritte Monomer zusetzt. Es besteht aber auch die Möglichkeit, die Polymerisation des Blockes B′ mit einem frisch zugesetzten Monomergemisch einzuleiten.

V. Je nachdem, ob ein Block B oder ein Block B′ hergestellt wurde, gibt es 2 unterschiedliche Arten der Herstellung des Blockes C. Dieser Block enthält einen hohen Anteil an Vinyl- und Isopropenyleinheiten. Die Gegenwart von Butadien ist fakultativ.

Gegenstand der Erfindung ist schließlich auch die Verwendung der ABC-Blockcopolymerisate zur Herstellung von Reifenlaufflächen gemäß Anspruch 13.

Im folgenden soll das Verfahren detailliert beschrieben werden.

Als Reaktionsmedium wird ein inertes organisches Lösemittel verwendet. Geeignet sind insbesondere Kohlenwasserstoffe mit 6 bis 12 C-Atomen wie Pentan, Hexan, Heptan, Oktan und Dekan sowie deren cyclische Analogen. Geeignet sind auch aromatische Lösemittel wie z. B. Benzol, Toluol, Xylole u. a. Selbstverständlich können auch Gemische der vorstehend beschriebenen Lösemittel eingesetzt werden.

Als Katalysator werden Alkyllithiumverbindungen eingesetzt, die durch Umsetzung von Lithium mit den entsprechenden Alkylhalogeniden leicht zugänglich sind. Die Alkylreste weisen 1 bis 10 C-Atome auf. Einzelne Wasserstoffatome können durch Phenylreste substituiert sein. Folgende Alkyllithiumverbindungen sind besonders geeignet: Methyllithium, Ethyllithium, Pentyllithium; bevorzugt wird n-Butyllithium.

Zur Verbesserung des kalten Flusses wird wenigstens eine Polymerisationsstufe vorteilhafterweise in Anwesenheit geringer Mengen eines Verzweigungsmittels, wie z. B. Divinylbenzol (DVB), durchgeführt. Bezogen auf 100 Teile Monomere werden maximal 0,5 Teile DVB eingesetzt. Ein solcher Zusatz entfällt, wenn nach der Polymerisation eine Kupplung vorgesehen ist.

Art und Menge von Katalysator und Verzweigungsmittel werden im allgemeinen so ausgewählt, daß das erhaltene Blockcopolymerisat folgende Eigenschaften aufweist:

Mooney-Viskosität ($ML_{1-4}$, 100 °C, DIN 53 523): 35 bis 120;

Uneinheitlichkeit U = (Mw/Mn) - 1, bestimmt durch gelpermeationschromtografische Analyse (GPC-Analyse): 0,6 bis 3,0;

Defo-Elastizität(80 °C, DIN 53 514): ≧ 20;

Bei dem vorliegenden Verfahren werden einzelne Blöcke in Abwesenheit eines Cokatalysators, andere in Gegenwart eines Cokatalysators durchgeführt.

Im ersten Fall, nämlich in Abwesenheit eines Cokatalysators, arbeitet man bei Temperaturen von 20 bis 120 °C, vorzugsweise von 20 bis 80 °C, und erhält im Falle der Diene Polymerisate, die mehr als 85 % 1,4-Struktureinheiten der allgemeinen Formel

$$-CH_2 - CH = \underset{\displaystyle R}{\underset{|}{C}} - CH_2 -$$

R = H (Butadien)
R = $CH_3$ (Isopren)
aufweisen.

Im zweiten Falle ist man daran interessiert, Polymerisate mit einem möglichst hohen Anteil von 1,2- und/oder 3,4-Struktureinheiten zu erhalten.

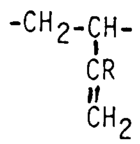

und/oder

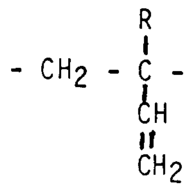

R = H (Butadien)
R = $CH_3$ (Isopren)
Die Auswahl der Cokatalysatoren und ihre Einsatzmenge richten sich daher nach ihrer Fähigkeit, die Mikrostruktur zu regeln, d. h. den Verlauf der Polymerisation im Hinblick auf eine möglichst vollständige Bildung von 1,2- und/oder 3,4-Struktureinheiten zu lenken.
Der Cokatalysator wird im allgemeinen aus der Gruppe

- der Ether,
- der tertiären Amine oder
- der etherhaltigen tertiären Amine

ausgewählt.

Geeignete Ether umfassen insbesondere

- Dialkylether des Ethylenglykols und Diethylenglykols, deren Alkylgruppen jeweils bis zu 4 C-Atome aufweisen.

Insbesondere bei der Herstellung von verzweigten Blockcopolymeren werden Ether der allgemeinen Formel

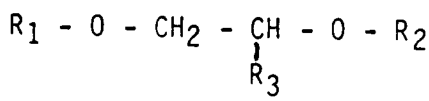

bevorzugt, wobei $R_3$ für Wasserstoff oder eine Methyl- oder Ethylgruppe steht und $R_1$ und $R_2$ Alkylreste mit einer unterschiedlichen Zahl von C-Atomen aus der Gruppe Methyl-, Ethyl-, n- und iso-Propyl sowie n-, iso-, sek.- und tert.- Butyl sind und die Summe der C-Atome in den beiden Alkylresten 5 bis 7 beträgt.

Geeignete tertiäre Amine sind z. B. N,N,N′,N′-Tetramethylethylendiamin, N,N,N′,N′-Tetraethylethylendiamin und Triethylendiamin.

Geeignete etherhaltige Amine sind N-Methylmorpholin und N-Ethylmorpholin.

Der Cokatalysator wird in einem Verhältnis von 2 : 1 bis 30 : 1, insbesondere 2 : 1 bis 15 : 1, bezogen auf die Molzahl des Katalysators eingesetzt. Bei höheren Temperaturen werden im allgemeinen größere Mengen an Cokatalysator benötigt, um die gewünschte Mikrostrukturregelung zu erzielen. Reaktionstemperaturen von 100 °C sollten nicht überschritten werden. Die Polymerisation wird zweckmäßigerweise bei konstanter Temperatur durchgeführt. Es ist auch möglich, bei steigender oder fallender Temperatur zu arbeiten; jedoch ist in diesem Falle dafür Sorge zu tragen, daß die Mikrostruktur nicht grundsätzlich verändert wird.

Durch geeignete Maßnahmen ist zu gewährleisten, daß der Gehalt an Polystyrolblöcken im ABC-Blockcopolymerisat 2 Massen-% nicht überschreitet. (Ein Verfahren zur Bestimmung des Gehaltes an Polystyrolblöcken ist in dem Standardwerk Houben-Weyl "Methoden der Organischen Chemie", Band 14/1 (1061), Seite 698 angegeben.) Es ist auch möglich, dem Block C eine Teilmenge des Styrols gegen Ende der Polymerisation zuzusetzen.

Es ist bekannt, daß einige als Cokatalysatoren vorgeschlagene Verbindungen die Eigenschaft haben, die Ausbildung von Polystyrolblöcken zu unterdrücken. Die gleiche Eigenschaft haben Verbindungen, die als Randomizer bezeichnet werden und meist Kaliumsalze von Alkoholaten sowie organischen Carbon- und Sulfonsäuren sind.

Gemäß einer besonderen Ausführungsform des Verfahrens können die nach Abschluß der Polymerisation vorliegenden "lebenden Polymere" mit einem Kupplungsmittel zu verzweigten oder sternförmigen

Blockcopolymerisaten umgesetzt werden.

Geeignete Kupplungsmittel sind Polyepoxide wie epoxidiertes Leinsamenöl, Polyisocyanate, Polyketone wie 1,3,6-Hexantrion, Polyanhydride wie beispielsweise das Dianhydrid der Pyromellithsäure und Dicarbonsäureester wie Adipinsäuredimethylester. Besonders geeignet sind

- die Tetrahalogenide der Elemente Si, Ge, Sn und Pb, insbesondere $SiCl_4$,
- organische Verbindungen der allgemeinen Formel $R_n[SiHal_3]_n$, mit n = 1 bis 6, insbesondere n = 1 und 2. Hierbei ist R ein n-wertiger organischer Rest, beispielsweise ein aliphatischer, cycloaliphatischer oder aromatischer Rest. Beispielhaft seien 1,2,4-Tris(2-trichlorsilylethyl)-cyclohexan, 1,8-Bis-(trichlorsilyl)-octan und 1-(Trichlorsilyl)-octan genannt.
- organische Verbindungen, die mindestens einmal die Gruppierung > $SiHal_2$ enthalten, wie z. B. Dimethylsilylchlorid.
- Halogensilanwasserstoffe der allgemeinen Formel $Si(H)_m(Hal)_{4-m}$ mit $3 \geqq m \geqq 1$
- Di- und Trivinylbenzole, wie z. B. 1,4-Divinylbenzol.

Das Verfahren kann sowohl diskontinuierlich wie kontinuierlich betrieben werden.

Mit Hilfe der Dämpfungskurve ist der Fachmann in der Lage, durch Variation der Reaktionsbedingungen Blockcopolymerisate herzustellen, die zu Reifenlaufflächen mit den gewünschten Eigenschaftskombinationen verarbeitet werden können.

Die erhaltenen amorphen Polymerisate werden, wenn sie zu Vulkanisaten verarbeitet werden sollen, mit aktiven, verstärkenden Füllstoffen, einem Vulkanisationsmittel und üblichen Zusatzstoffen gemischt. Im allgemeinen ist es erforderlich, diese Vermischung unter Einwirkung von Scherkräften durchzuführen.

Massen, welche zur Herstellung von Reifenlaufflächen bestimmt sind, werden im allgemeinen zu Rohlaufstreifen geformt. Bei der Homogenisierung und Formgebung, die beispielsweise in einem Extruder erfolgen kann, werden die Bedingungen von Temperatur und Zeit so gewählt, daß keine Vulkanisation eintritt.

Die Kautschukkomponente in den vulkanisierbaren Massen besteht beispielsweise zu 70 bis 100 Massen-% aus einem Blockcopolymerisat der Erfindung und 0 bis 30 Massen-% eines Kautschuks aus der Gruppe der bekannten, amorphen Allzweckkautschuke wie z. B. Styrol-Butadien-Kautschuk, 1,4-cis-Polybutadien, 1,4-cis-Polyisopren und Naturkautschuk.

Aktive, verstärkende Füllstoffe sind beispielsweise Reifenlaufflächenruße unterschiedlicher Aktivität, gegebenenfalls mit Silan-Haftvermittlern behandelte, hochdisperse Kieselsäuren und ihre Gemische.

Übliche Vulkanisationsmittel enthalten z. B. Schwefel in Kombination mit Beschleunigern. Die Menge des Vulkanisationsmittels richtet sich nach den übrigen Komponenten in der vulkanisierbaren Masse und kann durch einfache, orientierende Versuche ermittelt werden.

Als Zusatzstoff können die in der Kautschuktechnik üblichen Weichmacheröle, bevorzugt aromatische, aliphatische und naphthenische Kohlenwasserstoffe, sowie übliche Hilfsmittel, wie beispielsweise Zinkoxid, Stearinsäue, Harzsäuren, Alterungsschutzmittel und Ozonschutzwachse, in üblichen Mengen zugesetzt werden.

Die erfindungsgemäßen Blockcopolymerisate eignen sich zur Herstellung der Laufflächen von PKW- und LKW-Reifen und zwar sowohl zur Herstellung von Neureifen als auch zur Runderneuerung von Altreifen.

Die Reifenlaufflächen zeichnen sich insbesondere durch folgende vorteilhafte Eigenschaften aus:

- hoher Naßrutschwiderstand
- hoher Abriebwiderstand
- niedriger Rollwiderstand und daher geringer Treibstoffverbrauch
- hohe Verschleißfestigkeit
- Allwettereigenschaften

Als Lösemittel wurde ein Kohlenwasserstoffgemisch eingesetzt, das zu etwa 50 % aus Hexan bestand. Weitere Bestandteile dieses hydrierten $C_6$-Schnittes waren insbesondere Pentan, Heptan und Oktan sowie deren Isomere. Das Lösemittel wurde mit $N_2$ gestippt und anschließend über einem Molekularsieb der Porenweite 0,4 nm getrocknet, so daß der Wasseranteil unter 10 ppm gesenkt wurde.

Die organische Lithiumverbindung war n-Butyllithium, die, wenn nicht anders angegeben, in Form einer 15gewichtsprozentigen Lösung in Hexan zur Anwendung kam.

Die Monomeren Isopren und Styrol wurden vom Stabilisator abdestilliert und mit n-Butyllithium in Gegenwart von o-Phenanthrolin austitriert.

Die Glykolether wurden mit n-Butyllithium in Gegenwart von o-Phenanthrolin austitriert.

Das Divinylbenzol (DVB) stellt ein Gemisch des m- und p-Divinylbenzols dar und wurde in Form einer 64prozentigen Lösung in Hexan eingesetzt.

Die Bestimmung des Umsatzes erfolgte, indem man den Feststoffgehalt nach Abdampfen des Lösemittels und der Monomeren bestimmte.

Als Kupplungsausbeute wird der Prozentanteil an Kautschuk angesehen, der nach der Umsetzung mit einem Kupplungsmittel eine sternförmige Struktur aufweist und sich gegenüber dem ungekuppelten Kautschuk durch ein erheblich höheres Molekulargewicht auszeichnet. Die Bestimmung erfolgt mit der GPC-Analyse, wobei Tetrahydrofuran als Lösemittel und Polystyrol als Säulenmaterial eingesetzt wird. Die Polymerisate werden mit einem Lichtstreuungsdetektor charakterisiert. Zu diesem Zweck werden dem Reaktor vor Zugabe des Kupplungsmittels und zu Ende der Reaktion Proben entnommen.

Die Mikrostruktur wurde IR-spektroskopisch bestimmt.

Die Defo-Elastizität DE wurde gemäß DIN 53 514 bestimmt.

Die Uneinheitlichkeit U wurde mittels GPC-Analyse bestimmt.

Beispiel 1

In einem mit trockenem Stickstoff gespülten, ersten V2A-Rührautoklaven wurden 600 Teile Hexan (technischer $C_6$-Schnitt), 63,5 Teile 1,3-Butadien, 13 Teile Styrol und 0,02 Teile DVB vorgelegt und unter thermoelektrischer Kontrolle mit n-Butyllithium (BuLi) tritriert. Die Polymerisation wurde bei 50 °C durch Zugabe von 0,054 Teilen BuLi gestartet und durch Kühlung nahezu konstant gehalten. Nach 50 Minuten wurde eine Probe gezogen, aus der der Umsatz mit 79 % bestimmt und deren Mikrostruktur gemessen wurde (Block A).

Unmittelbar danach wurde 1,0 Teil Diethoxyethan zugegeben. Die Temperatur wurde konstant gehalten. Nach 65 Minuten wurde eine Probe gezogen, aus der der Umsatz mit 94 % bestimmt und deren Mikrostruktur gemessen wurde (Block A + B).

Unmittelbar danach wurde innerhalb von 2 Minuten der Inhalt eines zweiten V2A-Rührautoklaven (T = 40 °C) zugegeben. Dieser enthielt eine mit BuLi titrierte Lösung von 24 Teilen Isopren in 50 Teilen Hexan. Die Temperatur wurde konstant gehalten.

2,5 Stunden nach dem Start war die Umsetzung nahezu quantitativ. Die Lösung wurde durch Zugabe von 0,5 Teilen 2,2'-Methylen-bis-(4-methyl-6-tert.-butylphenol) in 2 Teilen feuchtem Toluol gestoppt. Das Lösemittel wurde mit Wasserdampf abdestilliert und das Polymerisat 24 Stunden bei 70 °C im Umlufttrokkenschrank getrocknet.

Beispiele 2 bis 4

Die Versuchsdurchführung entsprach Beispiel 1.

Die Einsatzmengen und veränderten Reaktionsparameter sind Tabelle 1 zu entnehmen.

Tabelle 1

| | Beispiel 2 | Beispiel 3 | Beispiel 4 |
|---|---|---|---|
| Vorlage zu Block A | | | |
| Teile Hexan | 285 | 285 | 600 |
| Teile Butadien | 60 | 55 | 60 |
| Teile Isopren | - | - | 15 |
| Teile Styrol | 20 | 15 | - |
| Teile DVB | 0,02 | 0,02 | 0,02 |
| Start mit | | | |
| Teilen BuLi | 0,051 | 0,055 | 0,05 |
| Start von Block B | | | |
| nach Minuten | 62 | 110 | 50 |
| Umsatz (%) | 67 | 82 | 75 |
| durch Zugabe von | | | |
| Teilen Cokatalysator | 0,75 *) | 0,75 *) | 1,0 **) |
| Start von Block C | | | |
| nach Minuten | 127 | 178 | 53 |
| Umsatz (%) | 96 | 100 | 88 |
| durch Zugabe von | | | |
| Teilen Hexan | 200 | 200 | 50 |
| Teilen Butadien | - | 5 | - |
| Teilen Isopren | 15 | 15 | 10 |
| Teilen Styrol | 5 | 10 | 15 |
| Ende der Polymerisation nach Stunden | 4,5 | 5,0 | 2,5 |

*) 1-tert.-Butoxy-2-ethoxyethan

**) 1,2-Diethoxyethan

Verleichsbeispiel A (EP-A- 0 173 791); Seite 16, 19, 20

Tabelle 2

Prozentanteil der Strukturelemente, die durch Polymerisation der folgenden Monomeren erhalten wurden

| | Butadien | | | Isopren | | Styrol |
|---|---|---|---|---|---|---|
| | trans-1.4 | 1.2 *) | cis 1.4 | 3.4 | 1.4 | |
| Beispiel 1 | | | | | | |
| Block A | 50 | | 32 | - | - | 4 |
| Block AB | 40 | | 25 | - | - | 12 |
| Block ABC | 28 | 17 | 20 | 18 | 2 | 14 |
| Beispiel 2 | | | | | | |
| Block A | 47 | 12 | 34 | - | - | - |
| Block AB | 39 | 15 | 24 | - | - | 22 |
| Block ABC | 29 | 12 | 20 | 9 | 3 | 27 |
| Beispiel 3 | | | | | | |
| Block A | 45 | 12 | 34 | - | - | 8 |
| Block AB | 38 | 12 | 29 | - | - | 21 |
| Block ABC | 28 | 11 | 21 | 9 | 4 | 27 |
| Beispiel 4 | | | | | | |
| Block A | 49 | 14 | 33 | 2 | 2 | - |
| Block AB | 47 | 18 | 29 | 4 | 2 | - |
| Block ABC | 28 | 17 | 19 | 13 | 3 | 20 |
| Beispiel 5 | | | | | | |
| Block A | n. b. | n. b. | n. b. | - | - | n. b. |
| Block AB | 43 | 17 | 31 | - | - | 9 |
| Block ABC | 30 | 14 | 24 | 12 | 2 | 18 |
| Vergleichsbeispiel A | 23 | 34 | 13 | 26 | 5 | - |

*) einschließlich Isopren-1,2

n. b. = nicht bestimmt

Tabelle 3

| Charakterisierung der ABC-Blockcopolymerisate | | | | | | |
|---|---|---|---|---|---|---|
| Beispiel | 1 | 2 | 3 | 4 | 5 | A |
| Block A (%) | 61 | 53 | 57 | 56 | 56 | n. b. |
| B (%) *) | 11 | 24 | 13 | 10 | 10 | n. b. |
| C (%) *) | 28 | 23 | 30 | 34 | 34 | 15 |
| Mooney-Viskosität | 48 | 56 | 72 | 46 | 68 | 76 |
| DE | 21 | 25 | 36 | 21 | 33 | 72 |
| U | 0,9 | 1,1 | 1,6 | 0,8 | 2,2 | 1,3 |
| Kupplungsausbeute (%) | - | - | - | - | 77 | - |
| Zahl der Arme | - | - | - | - | 9 | - |

*) berechnet aus den Umsätzen
n. b. = nicht besimmt

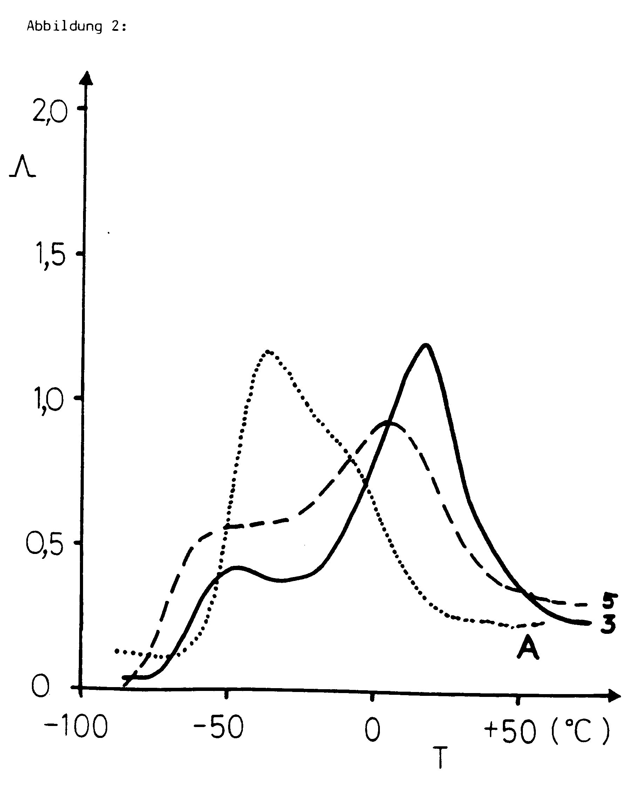

Die Abbildungen 1 und 2 zeigen die Torsiogramme nach Schmieder-Wolf von vulkanisierten Probekörpern, hergestellt analog der Vorschrift für SBR in der ISO 2322-1985 (E) Series A.
Es ist deutlich zu erkennen, daß die Torsiogramme der erfindungsgemäßen Beispiele breiter sind als das Torsiogramm gemäß Vergleichsbeispiel A.

Beispiel 5

In einem Rührautoklaven wurden 335 Teile Hexan, 60 Teile Butadien und 6 Teile Styrol vorgelegt und unter thermoelektrischer Kontrolle mit BuLi austitriert. Die Polymerisation wurde bei 50 °C durch Zugabe von 0,077 Teilen BuLi gestartet und die Temperatur durch Kühlung konstant gehalten. Nach 45 Minuten wurde eine Probe gezogen, der Umsatz betrug 85 %.
Unmittelbar danach wurden 0,65 Teile 1,2-Diethoxyethan zugegeben und bei konstanter Temperatur weiterpolymerisiert. Eine nach 62 Minuten gezogene Probe zeigt nahezu vollständigen Umsatz an. Danach wurde innerhalb von 2 Minuten der Inhalt eines zweiten Rührautoklaven (T = 50 °C) zugegeben. Dieser enthielt 220 Teile Hexan, 7 Teile Butadien, 17 Teile Isopren und 10 Teile Styrol. Die Temperatur wurde durch Kühlung im Bereich von 50 bis 56 °C gehalten. Nach 88 Minuten war der Umsatz vollständig, und 0,66 Teile DVB wurden zugefügt. Nach weiteren 2 Stunden bei 50 °C wurde die Polymerisation wie unter Beispiel 1 gestoppt und aufgearbeitet.

Die Auswertung der GPC-Analyse ergibt, daß 77 % des Polymeren gekoppelt vorliegt. Das Molekulargewicht dieses Polymeren ist um ca. das 9-fache größer als das der ungekoppelten Molekülketten.

## Patentansprüche

**1.** Ungesättigte, elastomere ABC-Blockcopolymerisate auf Basis von
40 bis 80 % Butadien-1,3,
5 bis 40 % Isopren und
2 bis 30 % Styrol,
bestehend aus
40 bis 75 % eines Blockes A, der Styrol- und Butadieneinheiten oder Isopren- und Butadieneinheiten mit einem Gehalt an verteilten Vinyl- bzw. Isopropenylgruppen von weniger als 15 % enthält,
bis 25 % eines Blockes B, der Styrol- und Butadieneinheiten oder Isopren- und Butadieneinheiten mit einem Vinyl- bzw. Isopropenylgehalt von mehr als 70 % enthält, oder
bis 25 % eines Blockes B', der Styrol-, Isopren- und gegebenenfalls Butadieneinheiten mit einem Gehalt an gleichmäßig verteilten Isopropenyl- bzw. Vinylgruppen von weniger als 15 % enthält, und
20 bis 55 % eines Blockes C, der Styrol- und Isopreneinheiten sowie gegebenenfalls Butadieneinheiten mit einem Isopropenyl- bzw. Vinylgehalt von mehr als 70 % enthält.

**2.** ABC-Blockcopolymerisate gemäß Anspruch 1,
dadurch gekennzeichnet,
daß der Anteil der Butadieneinheiten im Block A 70 bis 95 % beträgt.

**3.** ABC-Blockcopolymerisate gemäß Anspruch 1,
dadurch gekennzeichnet,
daß der Anteil der Butadieneinheiten im Block B 50 bis 90 % beträgt.

**4.** ABC-Blockcopolymerisate gemäß den Ansprüchen 1 bis 3,
dadurch gekennzeichnet,
daß die Blockcopolymerisate mit Verzweigungs- oder Kupplungsmitteln verzweigt sind.

**5.** Verfahren zur Herstellung der ABC-Blockcopolymerisate gemäß Anspruch 1 durch anionische Polymerisation der Monomeren in einem inerten organischen Lösemittel in Gegenwart einer Li-organischen Verbindung und eines Cokatalysators,
dadurch gekennzeichnet,
daß man
a) zunächst einen Block A herstellt, indem man Butadien und Styrol oder Butadien und Isopren polymerisiert,
b) dann einen Block B herstellt, indem man einen Cokatalysator zusetzt und die Polymerisation fortsetzt, oder einen Block B' herstellt, indem man das noch fehlende dritte Monomere aus der Gruppe Butadien, Isopren und Styrol zusetzt und die Polymerisation fortsetzt
und
C) einen Block C herstellt, indem man nach Polymerisation des Blockes B das noch fehlende dritte Monomere aus der Gruppe Butadien, Isopren und Styrol zusetzt bzw. nach Polymerisation des Blockes B' einen Cokatalysator zusetzt und die Polymerisation zu Ende führt.

**6.** Verfahren nach Anspruch 5,
dadurch gekennzeichnet,
daß man eine monofunktionelle Li-organische Verbindung einsetzt.

**7.** Verfahren nach den Ansprüchen 5 und 6,
dadurch gekennzeichnet,
daß man als Cokatalysator einen Ethylenglykoldialkylether der Formel

$$R_1 - O - CH_2 - \underset{\displaystyle R_3}{\underset{|}{CH}} - O - R_2$$

einsetzt, wobei $R_3$ für Wasserstoff oder eine Methyl- oder Ethylgruppe steht und $R_1$ und $R_2$ Alkylreste mit einer unterschiedlichen Zahl von C-Atomen aus der Gruppe Methyl-, Ethyl-, n- und iso-Propyl sowie n-, iso-, sek.- und tert.- Butyl sind und die Summe der C-Atome in den beiden Alkylresten 5 bis 7 beträgt.

**8.** Verfahren nach Anspruch 9,
dadurch gekennzeichnet,
daß $R_3$ = H ist.

**9.** Verfahren nach den Ansprüchen 6 bis 8,
dadurch gekennzeichnet,
daß man die nach vollständiger Polymerisation erhaltenen Polymeren mit einem Kupplungsmittel umsetzt.

**10.** Verfahren nach den Ansprüchen 5 bis 9,
dadurch gekennzeichnet,
daß man wenigstens einen der Verfahrensschritte der Polymerisation in Gegenwart von Divinylbenzol durchführt.

**11.** Verwendung der ABC-Blockcopolymerisate gemäß den Ansprüchen 1 bis 4 zur Herstellung der Laufflächen von Reifen.

## Claims

1. An unsaturated, elastomeric ABC block copolymer based on
from 40 to 80% of 1,3-butadiene,
from 5 to 40% of isoprene and
from 2 to 30% of styrene,
comprising
from 40 to 75% of a block A which contains styrene and butadiene units or isoprene and butadiene units, with a content of distributed vinyl or isopropenyl groups of less than 15%,
up to 25% of a block B which contains styrene and butadiene units or isoprene and butadiene units, with a vinyl or isopropenyl content of greater than 70%, or
up to 25% of a block B' which contains styrene, isoprene and, if desired, butadiene units, with a content of uniformly distributed isopropenyl or vinyl groups of less than 15%, and
from 20 to 55% of a block C which contains styrene and isoprene units and, if desired, butadiene units, with an isopropenyl or vinyl content of greater than 70%.

2. An ABC block copolymer according to Claim 1, characterised in that the proportion of butadiene units in block A is from 70 to 95%.

3. An ABC block copolymer according to Claim 1, characterised in that the proportion of butadiene units in block B is from 50 to 90%.

4. An ABC block copolymer according to any of Claims 1 to 3, characterised in that the block copolymer has been branched by means of branching or coupling agents.

5. A process for the preparation of an ABC block copolymer according to Claim 1 by anionic polymerisation of the monomers in an inert organic solvent in the presence of an organolithium compound and in the presence of a cocatalyst, characterised in that
   a) first a block A is prepared by polymerising butadiene and styrene or butadiene and isoprene,
   b) a block B is then prepared by adding a cocatalyst and continuing the polymerisation, or a block B' is prepared by adding the remaining, third monomer from the group consisting of butadiene, isoprene and styrene and continuing the polymerisation, and
   c) a block C is prepared by, after polymerisation of block B, adding the remaining, third monomer from the group consisting of butadiene, isoprene and styrene or, after the polymerisation of block B', adding a cocatalyst, and continuing the polymerisation to completion.

6. A process according to Claim 5, characterised in that a monofunctional organolithium compound is employed.

7. A process according to either of Claims 5 and 6, characterised in that, as cocatalyst, an ethylene glycol dialkyl ether of the formula

$$R_1-O-CH_2-\underset{\underset{\displaystyle R_3}{|}}{CH}-O-R_2$$

is employed in which $R_3$ is hydrogen or a methyl or ethyl group, and $R_1$ and $R_2$ are alkyl radicals having a different number of carbon atoms, from the group consisting of methyl, ethyl, n- and isopropyl, and n-, iso-, sec- and tert-butyl, and the total number of carbon atoms in the two alkyl radicals is from 5 to 7.

8. A process according to Claim 7, characterised in that $R_3$ is H.

9. A process according to any of Claims 6 to 8, characterised in that the polymer obtained when the polymerisation is complete is reacted with a coupling agent.

10. A process according to any of Claims 5 to 9, characterised in that at least one of the process steps in the polymerisation is carried out in the presence of divinylbenzene.

11. The use of an ABC block copolymer according to any of Claims 1 to 4 for the production of tyre treads.

**Revendications**

1. Produits de copolymérisation en bloc ABC, insaturés, élastomères, à base de
   40 à 80 % de butadiène-(1,3),
   5 à 40 % d'isoprène et
   2 à 30 % de styrène,
   constitués par
   40 à 75 % d'un bloc A renfermant des unités styrène et butadiène ou des unités isoprène et butadiène d'une teneur en groupes vinyle et isopropényle répartis inférieure à 15 %,
   jusqu'à 25 % d'un bloc B renfermant des unités styrène et butadiène ou des unités isoprène et butadiène d'une teneur en vinyle et isopropényle supérieure à 70 %, ou
   jusqu'à 25 % d'un bloc B' renfermant des unités styrène, des unités isoprène et éventuellement des unités butadiène d'une teneur inférieure à 15 % en groupe isopropényle et en groupe vinyle uniformément répartis,
   20 à 55 % d'un bloc C renfermant des unités styrène et isoprène, ainsi qu'éventuellement des unités butadiène, d'une teneur en isopropényle et en vinyle supérieure à 70 %.

2. Les produits de copolymérisation en bloc ABC selon la revendication 1,
   caractérisés en ce que la fraction des unités butadiène dans le bloc A est de 70 à 95 %.

3. Les produits de copolymérisation en bloc ABC selon la revendication 1,
   caractérisés en ce que la fraction des unités butadiène dans le bloc B est de 50 à 90 %.

4. Les produits de copolymérisation en bloc ABC selon les revendications 1 à 3,
   caractérisés en ce que les produits de polymérisation en bloc sont ramifiés à l'aide d'agents de ramification ou de copulation.

5. Procédé de préparation des produits de copolymérisation en bloc ABC selon la revendication 1, par polymérisation anionique des monomères dans un solvant organique inerte en présence d'un composé organique du lithium et d'un co-catalyseur,
   caractérisés en ce que
   a) on prépare d'abord un bloc A en polymérisant du butadiène et du styrène ou du butadiène et de l'isoprène,
   b) on prépare ensuite un bloc B en ajoutant un co-catalyseur et en poursuivant la polymérisation, ou bien on prépare un bloc B' en ajoutant le troisième monomère manquant encore et appartenant au groupe du butadiène, de l'isoprène et du styrène, puis en poursuivant la polymérisation,
   et
   c) on prépare un bloc C en ajoutant, après la polymérisation du bloc B, le troisième monomère qui manque encore, du groupe du butadiène, de l'isoprène et du styrène, et en ajoutant, après la polymérisation du bloc B', un co-catalyseur, puis en conduisant la polymérisation à sa fin.

6. Procédé selon la revendication 5,
   caractérisé en ce que l'on utilise un composé organique mono-fonctionnel du lithium.

7. Procédé selon les revendication 5 et 6,
   caractérisé en ce que l'on utilise, comme co-catalyseur, un éther dialkylique de l'éthylène-glycol, de formule

$$R_1 - O - CH_2 - \underset{\displaystyle R_3}{\underset{|}{CH}} - O - R_2 \quad ,$$

$R_3$ représentant de l'hydrogène ou un groupe méthyle ou éthyle, et $R_1$ et $R_2$ étant des radicaux alkyle présentant un nombre différent d'atomes de carbone et appartenant au groupe des radicaux méthyle, éthyle, n-propyle et isopropyle, ainsi qu'au groupe des radicaux n-butyle, isobutyle, butyle secondaire et butyle tertiaire, tandis que la somme des atomes de carbone dans les deux radicaux alkyle a une valeur de 5 à 7.

**8.** Procédé selon la revendication 7,
caractérisé en ce que $R_3$ est de l'hydrogène.

**9.** Procédé selon les revendications 6 à 8,
caractérisé en ce que l'on fait réagir sur un agent de copulation les polymères obtenus après polymérisation complète.

**10.** Procédé selon les revendications 5 à 9,
caractérisé en ce que l'on effectue au moins l'une des étapes opératoires de la polymérisation en présence de divinyl-benzène.

**11.** L'utilisation des produits de copolymérisation en bloc ABC selon les revendications 1 à 4 pour la fabrication de bandes de roulement de pneumatiques.

Abbildung 1:

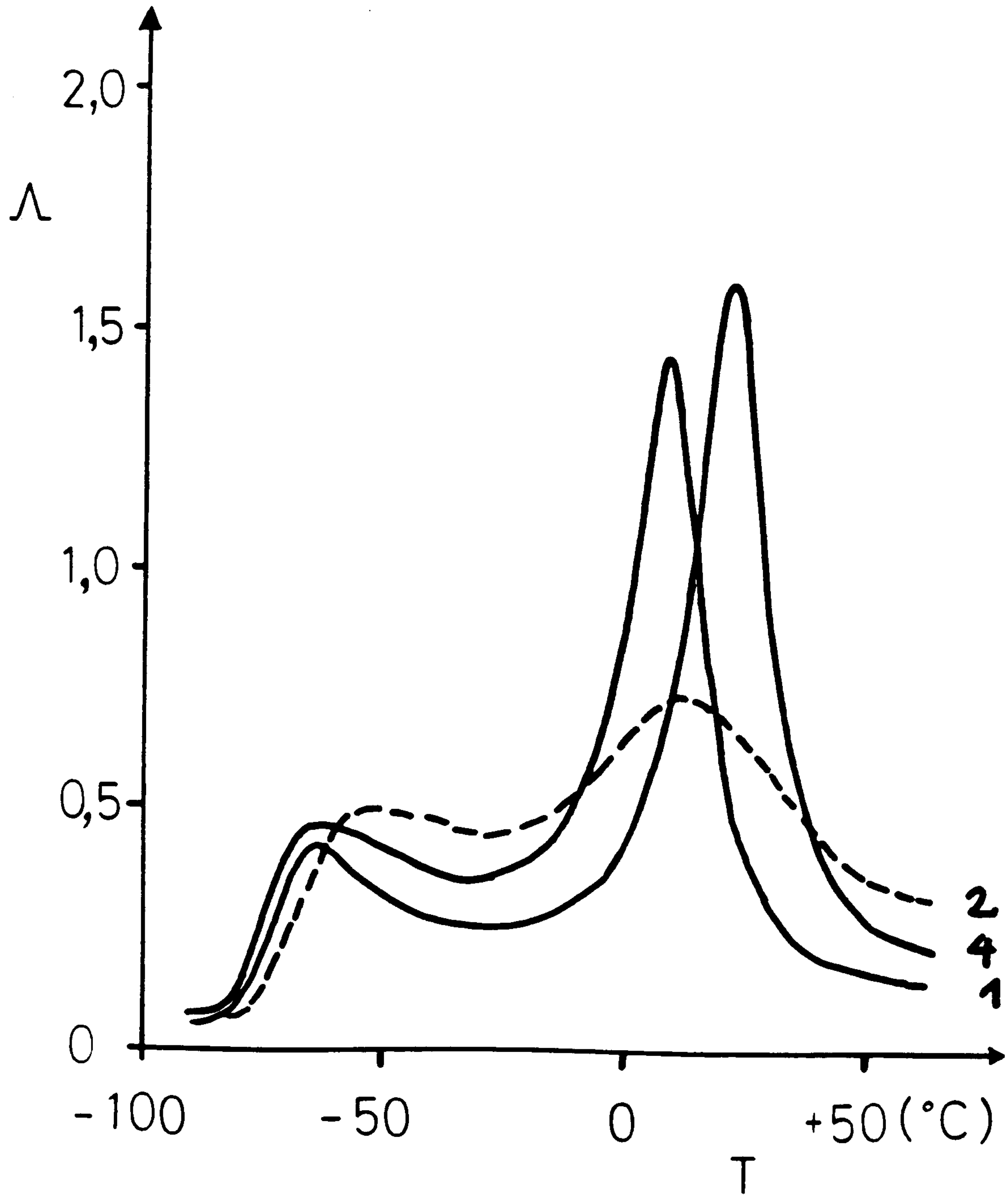

Abbildung 2: